# EUROPEAN PATENT APPLICATION

(11) **EP 1 449 424 A2**
(43) Date of publication of application: **25.08.2004**
(21) Application number: 04380037.4
(22) Date of filing: 17.02.2004
(51) Int. Cl.: A01D 46/26

(54) **Accessory able to be fitted to agricultural machinery for the picking of fruits**

(30) Priority: 18.02.2003 ES 200300394
(71) Applicant: Mora Velarde, Alfonso, 28010 Madrid (Spain) (ES)
(72) Inventor: Mora Velarde, Alfonso, 28010 Madrid (Spain) (ES)
(74) Representative: Munoz Garcia, Antonio

(57) **Abstract**

An agricultural accessory adequate to be fitted to a self-propelled machine, such as a rubbers or chains tractor, etc., preferably in the anchoring of the shovel of the same, although it can also be made in the rear anchoring, and which using the elevation and inclination functionalities of the aforementioned, allows the unfold of a network at the tree's ground level where the fruits are received, and subsequently, by means of some manoeuvres with the accessory, to place the fruits in a built-in tank or silo of the same. Once it is full, its contents may be poured in a bigger container, such as a trailer or similar.

## Description

### Object of the Invention

This invention refers to an agricultural accessory adequate to be fitted to a self-propelled machine, such as a rubbers tractor, chains tractor, etc., preferably in the anchoring of the shovel to the same, although it can also be made in the rear anchoring, and which using the functionalities of elevation and inclination of the aforementioned allow the unfold of a network at the tree's ground level where the fruits are received, and subsequently, by means of some manoeuvres with the accessory, to place the fruits in a built-in tank or silo of the same. Once it is full, its contents may be poured in a bigger container, such as a trailer or similar.

### Background of the Invention

As it is perfectly known, Spain is the main worldwide producer of olives, which are mainly used for the obtaining of oil; it is as well known that the majority of methods currently being used for their picking have remain unaltered during centuries.

During the last ten years, the cost increase and shortage of labour, together with the significant increase of the number of olive trees on production, have been the main factors causing the appearance of different auxiliary machinery, i.e. blowers, sweepers, vibrators, etc., which allow to expedite, ease and reduce costs of the picking of fruits.

Thus we find accessories and machines which favour new picking systems, tending to create better labour conditions for the farmers, as well as to imply a higher speed where the execution of the tasks is concerned, which finally mean a crucial saving on the costs of the related activities.

To be precise, and in the case of the olive, the picking of the same for the olive press, with which the oil is to be produced, is generally made in Spain between the months of December and March, period when it is not strange that it rains heavily, which results in undesired delays of the picking of the fruits.

Such picking is still being made mainly manually, due to mountainous location of the olive groves, where the task is more complex.

The manual stockpile is mainly made in three ways: the most expensive is picking them directly from the ground, to which end the ripening of the fruit has to be waited for it to fall down to the ground; and if opting for this method, provided the situation is adequate, the falling of the olives to the ground is presently caused and, once on the ground, by means of blowers and pick-up balers, they are picked.

A second way is the one called milking, where the olive farmer, using a ladder, manually picks the olives off the tree and places them in a basket bound to his waist. This method is mainly used for the table olive.

Finally, we have the knocking down, the most frequent system, where the worker knocks the branches of the tree with sticks to detach the fruits.

Where the mechanical picking is concerned, presently it is made by means of vibrating devices, manual ones or mounted over machinery, which detach in a short time a significant number of fruits that, generally and similarly when being knocked down, fall over the networks or rugs placed under the tree.

Nowadays there are several models of vibrators quite alike between them, being the most popular those complemented with a network, canvas or similar, with the shape of an inverted umbrella which opens for the vibrator to hold the tree and closes to pick the fallen fruit during the vibration.

This system is quite far from an adequate efficiency, among other causes, because it does not favour the necessary approach of the picking worker to the tree, since the edge of the network is at a height near the two meters.

Based on the intention of solving these problems, among others, is why the present invention has been devised.

Certainly, it is intended to provide an accessory for the picking of fruits adequate to be fitted to a self-propelled agricultural machine which allows to extend, at ground level and around the tree from which the fruits will be picked, a network bigger than the average surface of the vertical projection of the crowns of the trees of the vegetal variety grown at that specific country state, in order to receive and temporarily store the fruits which, through some induced way, become detached from such tree; to raise such network in order to move the fruits there contained aerially , thus avoiding their dragging along the ground to the next tree to be picked, if it still has capacity; and to deposit, in an optionally automatic manner, such fruits stored in the network into a cooperating tank of the accessory, where they will be temporarily stored until they are delivered to an external transport means. All of which is made in a simple, quick and efficient way.

These and other qualities and advantages of the invention will become easily evident for those experts in the art during the following detailed description, which has been prepared in relation to the attached drawings where a practical example of the invention is shown, currently preferred among other possible ones, of an accessory able to be fitted to an agricultural machine for the picking of fruits, example given with an illustrative, not limitative, intention, and where:

### Brief description of the drawings

Figure1 is a schematic ground view of a picking accessory of the invention operatively fitted to a self-propelled tractor means and with its networks unfolded around a fruit tree, in working position.
Figure 2 shows the lateral view which schematically illustrates the accessory's fitting manner to the agricultural machine.
Figure 3 represents a partial ground view of the fixed portions of the device which hold up the network.
Figure 4 shows a view similar to the previous figure, to which the oscillating portions of such device holding up the network have been added, in its fold or unfold positions.
Figure 5 proves the operating disposition of the device on the previous figure, unfolded around the trunk of a tree to be picked.
Figure 6 represents the device for holding up the network to which the tensing bars cooperating to unfold the same have been added.
Figure 7 is a detail of one of the tensing bars.
Figure 8 is an upper ground view of the disposition of the networks on the holding up device of figures 3 and 7.
Figure 9 shows a partial view of the leaning manoeuvre of the device, orienting the networks towards the access entrance of the temporary storage deposit.
Figure 10 represents the partial view of the position of the accessory during its displacement; and
Figure 11 presents the manoeuvres of approach and placing the networks to a tree which fruits will be picked.

### Preferred description of the Invention

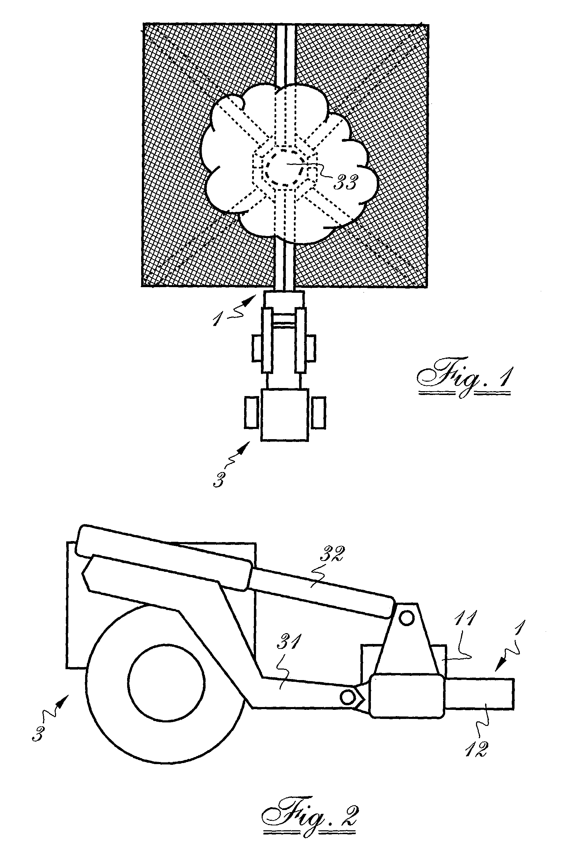

On Figure 1 of the drawings, on **1** it is indicated an accessory of the invention which is operatively fitted to a self-propelled tractor **3**, and which has its networks totally unfolded in working position around the trunk **33** of a tree which fruits will be picked.

Such accessory **1** consists of a temporary storage deposit **11** of variable configuration and capacity, which will be anchored over the anchoring of the shovel **31** of the tractor **3** or to the rear anchoring. To this deposit **11**, a couple of straight bars **12** and **12a** are jointly bound, adjacently linked between them, of a length also variable depending on the needs, but which generally are higher than 3 meters. Each one of these bars, **12** and **12a,** is extended along its free end by means of a portion of transversal bar in an oblique co-planar projection of approximately 45° , **13** for the bar **12** and **13a** for the **13** respectively, in a mirror-inverted distancing position of the axial plane of the accessory , finished off by means of a portion, **14** or **14a**, again uneven approximately 45°, in an inverted manner to be projected in distancing parallel between them, in a way that such projections inscribing a quadrant of adjacent circle and between both a semi-circle, which dimensions will be given by the average diameter of the trunk of the crop to be picked.

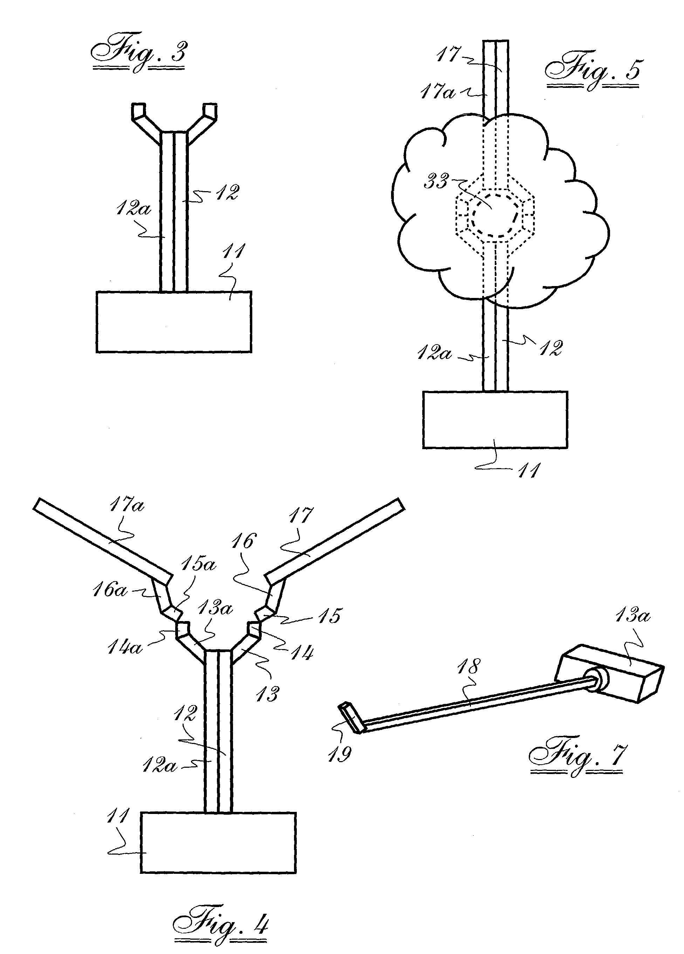

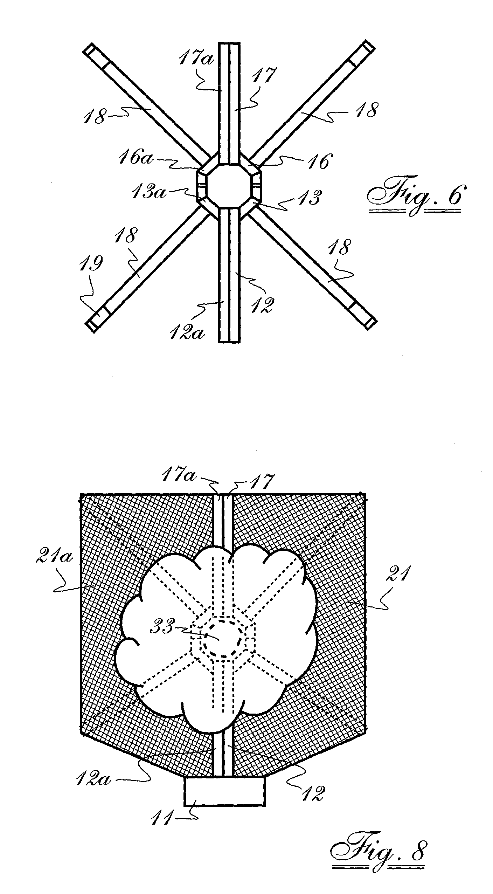

And similar groups pf bars, **17-16-15** and **17a-16a-15a,** are associated to the previous ones through their external uneven portions, **15** for the **14** and **15a** for the **15**, by means of a system of ball-and-sock joints or bolts, nor represented, which allow them to move distancing one from each other, as clearly shown on figure 4, and which at the closed position, as represented in figure 5, the uneven portions would define an octagonal opening able to contain the trunk **33** of a tree.

Being the inner surface of the uneven portions of the four groups of bars supplemented by sheets of an elastic material, such as a sheet of rubber or similar material, in order to preserve the trunk from frictions or hits by the accessory. And the swinging movement of approach and distancing of the groups of displacing bars will be commanded by the tractor operator.

From each one of the intermediate uneven portions, **13, 16, 13a** and **16a,** are transversally projected, by means of an articulation of double bolt with limitation of movement, tensing extending bars **18,** with their uneven end in elevation **19,** over which ends the edges of the network will be fixed and which will extend or retract them when the groups of articulated bars make the movement of closing or its contrary, respectively. And the uneven ends in elevation **19** will allow creating a limit by way of a railing for the networks to avoid the fall of the fruits thereof deposited.

Over each of the groups formed by the articulated groups of bars, **12-17** and **12a-17a**, with their corresponding tensing bars **18**, a portion of network is mounted with more convenient geometry, **21** and **21a,** respectively, on which edges an adequate casing is made to hold an elastic filament, made of rubber or other analogical material, in such a way that a bag is formed in the network which helps to keep the fruits. And the edges of the networks adjacent to the deposit **11** do not have such casing, in order to ease the exit and pouring of the fruits towards the same when the manoeuvre of leaning described hereunder is made.

Such manoeuvre, as well as the one of positioning the networks over the ground, are full dependent on the implement of the tractor **3**, preferable on the shovel of the same **31**, since the rotation and elevation capacities of such mechanism are used, which will be useful both for the transport of the accessory and for its positioning around the tree, even if it is located on quite sloping grounds.

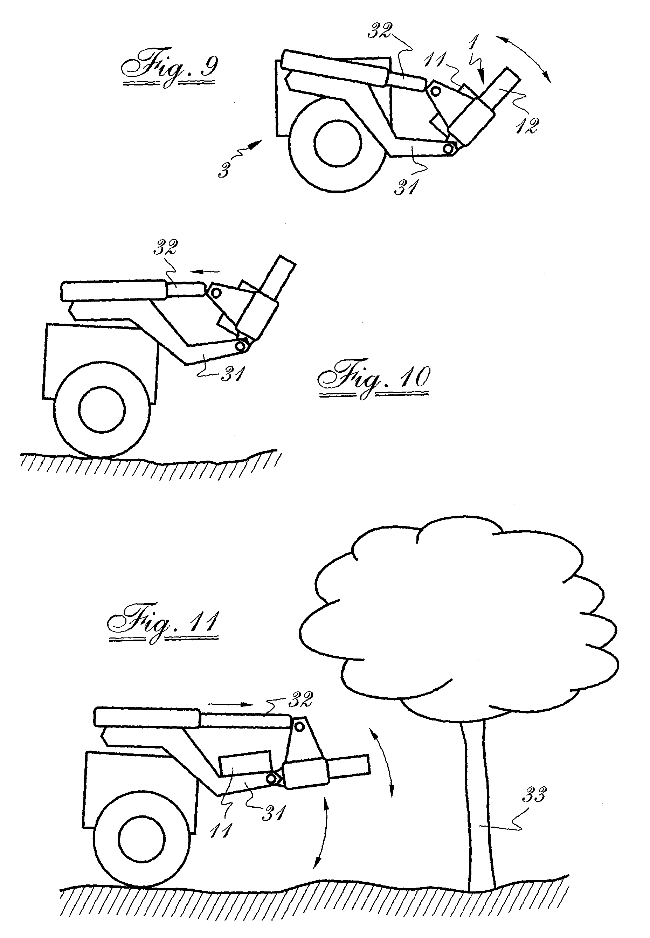

On figures 9, 10 and 11, different operative positions of the accessory are shown. On the first of them, figure 9, the arrow indicates the oscillating elevation movement made by the accessory, indicated on the bar portion **12,** induced by the contraction of the piston **32** of the tractor **3,** in order to pour the fruits stored in the networks into the deposit **11,.** On figure 10 we represent the elevation position of the accessory, through its elevation by the shovel **31** of such tractor, which allows its transport. And in figure 11 the accessory is in the approach and/or distancing position from the tree **33,** slightly elevated in order to avoid any roughness of the ground and also steep slopes.

Certain changes, modifications, alterations, substitutions o variations may be added to the described way of developing, since the description above is given mere and exclusively with an illustrative character and in no case, limitative.

For example, the bars **12** and **12a**, joint to the deposit **11**, may optionally have an internal mechanism of extension, adequate to ease the manoeuvre of approaching to the tree.

It is intended that all these changes and other ones which might be envisaged by people expert in the art, are comprised in this invention, provided that the spirit and more extensive reach of the following claims are not exceeded.

## Claims

1. An accessory able to be fitted to agricultural machinery for the picking of fruits, adequate to mechanically unfold a network around a tree from which the fruits will be picked and to receive those which, by any induced means, are detached from the tree, in order to temporarily store them until it is possible to deliver the same to a external transport means, **characterized** for being constituted by:
a temporary deposit means for fruits, in the way of an adequate silo to be anchored to the shovel or to other anchoring of the agricultural machinery to which the following will be associated;
a temporary receiving and holding means for the fruits, appropriate to mechanically unfold networks around the fruit tree with which such tasks will be made, formed by a frame made by two groups; one fixed joint to the storage means and formed by each of the adjacent bars fixed between them, which on their free ends have lateral inverted projections to create between them a space forming a semi-circle; and one with oscillating opening, formed by two bars similar to the previous bars, associated to those through their transverse projections by means of a ball-and-socket joint allowing them to optionally move in a transverse way distancing or approaching each other, forming when in the closed position, together with the fixed bars, a space adequate to surround the trunk of the three; having such receiving means, from the transverse projections of its bars, the fixed and the swinging ones, extension means adequate to cooperate with the mentioned bars in the holding of networks, under the way of tensing bars which free end is uneven in oblique elevation to induce the network to be held to form a barrier by way of a railing, being able such means to extend or retract them voluntarily; and
networks adequate to be extended from the bars forming each half of the frame of the holding means, up to the ends of the tensing bars and which have, on their external edge, a hem by way of a casing where an elastic filament may be inserted to allow the contraction of the peripheral part of the network thus inducing it to form a bag.
